# EUROPEAN PATENT APPLICATION

(11) **EP 4 694 407 A1**
(43) Date of publication of application: **11.02.2026**
(21) Application number: 24802820.1
(22) Date of filing: 28.04.2024
(51) Int. Cl.: H04W 56/00, H04W 36/00

(54) **TIMING ADVANCE ADJUSTMENT METHOD AND APPARATUS**

(30) Priority: 11.05.2023 CN 202310538226
(71) Applicant: Huawei Technologies Co., Ltd., Shenzhen, Guangdong 518129 (CN)
(72) Inventor: YUAN, Shitong, Shenzhen, Guangdong 518129 (CN); ZHANG, Jiayin, Shenzhen, Guangdong 518129 (CN)
(74) Representative: Goddar, Heinz J.
(86) International application number: PCT/CN2024/090440
(87) International publication number: WO 2024/230536

(57) **Abstract**

This application relates to the field of communication technologies, and discloses a timing advance adjustment method and an apparatus, to support cell handover of a terminal device without random access, and reduce interruption time of uplink signal transmission of the terminal device during cell handover. The method includes: A terminal device receives a handover command from a first cell, where the handover command instructs to perform handover to a second cell, sends a sounding reference signal (sounding reference signal, SRS) to the second cell based on a first timing advance (timing advance, TA), receives a TA adjustment command from the second cell, where the TA adjustment command includes an adjustment amount for the first TA, and the adjustment amount is determined by the second cell based on the received SRS, and sends an uplink signal to the second cell based on a second TA, where the second TA is determined based on the first TA and the adjustment amount.

## Description

### CROSS-REFERENCE TO RELATED APPLICATION

This application claims priority to Chinese Patent Application No. 202310538226.6, filed with the China National Intellectual Property Administration on May 11, 2023 and entitled "TIMING ADVANCE ADJUSTMENT METHOD AND APPARATUS", which is incorporated herein by reference in its entirety.

### TECHNICAL FIELD

Embodiments of this application relate to the field of communication technologies, and in particular, to a timing advance adjustment method and an apparatus.

### BACKGROUND

An important feature of uplink transmission is that uplink transmission from different terminal devices uses orthogonal multiple access (orthogonal multiple access) in time and frequency domain, and does not interfere with each other. To ensure orthogonality of uplink transmission from different terminal devices and avoid interference between the terminal devices in a cell, a network device requires that uplink signals from different terminal devices and in a same subframe but on different frequency domain resources arrive at the network device at basically aligned time. The network device can correctly decode the uplink signals provided that the network device receives, within a cyclic prefix (cyclic prefix, CP) range, the uplink signals sent by the terminal devices. Therefore, uplink synchronization requires that the time at which the uplink signals from the different terminal devices and in the same subframe arrive at the network device falls within the CP range.

In view of this, in the 3rd generation partnership project (3rd generation partnership project, 3GPP) standard, an uplink (uplink) timing advance (timing advance, TA) mechanism is used. From the perspective of the terminal device side, TA is essentially a negative offset (negative offset) between start time at which a downlink subframe is received and time at which an uplink subframe is transmitted. The network device may control, by controlling a TA of each terminal device, time at which uplink signals from different terminal devices arrive at the network device. For example, because a transmission delay of a terminal device farther away from the network device is greater than that of a terminal device closer to the network device, a larger TA is needed for the terminal device farther away from the network device to send an uplink signal earlier than the terminal device closer to the network device. In this way, uplink signals sent by the two terminal devices arrive at the network device at the same time, to implement uplink synchronization.

However, currently, before being handed over to a new cell, a terminal device needs to obtain, through random access, a TA applicable to the new cell. During cell handover, there is a problem of long interruption for uplink signal transmission.

### SUMMARY

Embodiments of this application provide a timing advance adjustment method and an apparatus, to support cell handover of a terminal device without random access, and reduce interruption time of uplink signal transmission of the terminal device during cell handover.

According to a first aspect, an embodiment of this application provides a timing advance adjustment method. The method may be performed by a terminal device, or may be performed by a component (for example, a processor, a chip, or a chip system) of the terminal device. Using execution by the terminal device as an example, the method includes: receiving a handover command from a first cell, where the handover command instructs to perform handover to a second cell (or instructs to perform handover from the first cell to the second cell); sending a sounding reference signal (sounding reference signal, SRS) to the second cell based on a first TA; receiving a TA adjustment command from the second cell, where the TA adjustment command includes an adjustment amount for the first TA, and the adjustment amount is determined by the second cell based on the received SRS; and sending an uplink signal to the second cell based on a second TA, where the second TA is determined based on the first TA and the adjustment amount. Optionally, the handover command is further used for triggering (or activating) sending of the SRS to the second cell, or activating the terminal device to periodically send the SRS to the second cell.

In this embodiment of this application, the first TA may be determined by the terminal device based on a TA used in the first cell and a time difference of arrival between a downlink reference signal of the first cell and a downlink reference signal of the second cell. For example, the first TA may be determined according to TA1=TA+M*RSTD, where TA1 represents the first TA, TA represents the TA used by the terminal device in the first cell, the reference signal time difference (reference signal time difference, RSTD) represents the time difference of arrival at the terminal device between the downlink reference signal of the first cell and the downlink reference signal of the second cell, M represents an adjustment coefficient, and M may be 1, 2, or the like. The first TA may alternatively be determined by the terminal device based on a TA or the like previously used for accessing the second cell. This is not limited in this application.

It should be understood that, in this embodiment of this application, it is not limited to that the terminal device (or the component of the terminal device or the like) sends the SRS to the second cell based on the first TA after receiving the handover command, the terminal device may send the SRS to the second cell based on the first TA at any time node during handover from the first cell to the second cell.

According to the foregoing method, during cell handover, the terminal device can obtain an accurate TA without random access, to support cell handover of the terminal device without random access, so as to avoid uplink signal sending interruption caused by random access of the terminal device, and reduce interruption time of uplink signal transmission of the terminal device during cell handover.

In a possible design, the first TA may alternatively be determined based on the TA used in the first cell, the time difference of arrival between the downlink reference signal of the first cell and the downlink reference signal of the second cell, and a difference between time of sending the downlink reference signal by the first cell and time of sending the downlink reference signal by the second cell. The difference between time of sending the downlink reference signal by the first cell and time of sending the downlink reference signal by the second cell may be indicated by the first cell to the terminal device. When the first cell does not indicate the difference in sending time, the difference in sending time may alternatively be 0.

According to the foregoing design, considering that time at which the first cell sends the downlink reference signal may be asynchronous with time at which the second cell sends the downlink reference signal, the first TA may be further compensated based on the difference between time of sending the downlink reference signal by the first cell and time of sending the downlink reference signal by the second cell, to improve accuracy of the first TA.

In a possible design, before receiving the handover command from the first cell, the method further includes: receiving SRS configuration information from the first cell, where the SRS configuration information is used for configuring at least one SRS resource of the second cell; and the sending the SRS to the second cell based on the first TA includes: sending the SRS to the second cell on a first SRS resource based on the first TA, where the first SRS resource belongs to the at least one SRS resource.

The foregoing design helps the terminal device learn of a resource for sending the SRS, to improve reliability of sending the SRS by the terminal device.

In a possible design, the SRS configuration information further includes an association relationship between at least one piece of downlink beam information and the at least one SRS resource, the handover command further includes first downlink beam information, and the first downlink beam information belongs to the at least one piece of downlink beam information; and the first SRS resource is an SRS resource that is in the at least one SRS resource and that has an association relationship with the first downlink beam information, or is an SRS resource that is in the at least one SRS resource and that corresponds to the first downlink beam information. Optionally, the downlink beam information includes one or more of the following: a reference signal (reference signal, RS) index (index) corresponding to a downlink beam, a transmission configuration indicator (transmission configuration indicator, TCI) state (state) identity document (identity document, ID), and bandwidth part (bandwidth part, BWP) information.

According to the foregoing design, the resource for sending the SRS by the terminal device may be implicitly indicated, to improve reliability of sending the SRS by the terminal device.

In a possible design, before receiving the SRS configuration information from the first cell, the method further includes: sending a measurement result of the second cell to the first cell, where the measurement result includes a measurement result of one or more reference signals of the second cell, and is used for determining the at least one piece of downlink beam information associated with the at least one SRS resource.

According to the foregoing design, the first cell or the second cell can select a downlink beam based on the measurement result of one or more reference signals of the second cell, and configure a beam-level SRS resource.

In a possible design, the handover command further includes SRS resource indication information, and the sending the SRS to the second cell based on the first TA includes: sending, based on the first TA, the SRS to the second cell on an SRS resource indicated by the SRS resource indication information.

According to the foregoing design, the resource for sending the SRS by the terminal device may be indicated, to improve reliability of sending the SRS by the terminal device.

In a possible design, the method further includes: sending the second TA to the second cell.

The foregoing design helps the second cell learn of a TA currently used by the terminal device, to prevent TA adjustment for the terminal device from exceeding a specified TA range.

According to a second aspect, an embodiment of this application provides a timing advance adjustment method. The method may be performed by a first cell or a second cell, or may be performed by a network device in the first cell or the second cell, or may be performed by a component (for example, a processor, a chip, or a chip system) of the network device in the first cell or the second cell. Using execution by the first cell or the second cell as an example, the method includes: The first cell sends a handover command to a terminal device, where the handover command instructs to hand over the terminal device to the second cell (or instructs to hand over the terminal device from the first cell to the second cell); the second cell receives an SRS from the terminal device, where the SRS is sent by the terminal device based on a first TA; the second cell sends a TA adjustment command to the terminal device, where the TA adjustment command includes an adjustment amount for the first TA, and the adjustment amount is determined by the second cell based on the received SRS; and the second cell receives an uplink signal from the terminal device, where the uplink signal is sent by the terminal device based on a second TA, and the second TA is determined by the terminal device based on the first TA and the adjustment amount.

In this embodiment of this application, the first TA may be determined by the terminal device based on a TA used by the terminal device in the first cell, and a time difference of arrival at the terminal device between a downlink reference signal of the first cell and a downlink reference signal of the second cell, or may be determined by the terminal device based on a TA previously used for accessing the second cell. This is not limited in this application.

In a possible design, the handover command is further used for triggering (or activating) the terminal device to send the SRS to the second cell; or making a preconfigured SRS resource take effect, so that the terminal device sends the SRS to the second cell.

In a possible design, the handover command is further used for activating the terminal device to periodically send the SRS to the second cell.

In a possible design, before the first cell sends the handover command to the terminal device, the method further includes: The first cell sends SRS configuration information to the terminal device, where the SRS configuration information is used for configuring at least one SRS resource of the second cell; and that the second cell receives the SRS from the terminal device includes: The second cell receives the SRS from the terminal device on a first SRS resource, where the first SRS resource belongs to the at least one SRS resource.

In a possible design, the SRS configuration information further includes an association relationship between at least one piece of downlink beam information and the at least one SRS resource, the handover command further includes first downlink beam information, and the first downlink beam information belongs to the at least one piece of downlink beam information; and the first SRS resource is an SRS resource that is in the at least one SRS resource and that has an association relationship with the first downlink beam information, or is an SRS resource that is in the at least one SRS resource and that corresponds to the first downlink beam information. Optionally, the downlink beam information includes one or more of the following: an RS index, a TCI-state ID, and BWP information corresponding to a downlink beam.

In a possible design, a frequency domain resource for SRS sending (or a frequency domain resource in an SRS resource for SRS sending) may include a target cell for SRS sending. The target cell for SRS sending may be determined based on a target cell instructed by the handover command, or may be determined based on information that is about the target cell for SRS sending and that is included in SRS resource configuration information. Alternatively, the frequency domain resource for SRS sending may include a BWP for SRS sending. The BWP for SRS sending may be determined based on BWP information included in the first downlink beam information, or may be determined based on BWP information included in the SRS resource configuration information, or may be determined based on BWP indication information included in the handover command.

In a possible design, the handover command may include an SRS resource set identifier (SRS resource set ID) or an SRS resource identifier (SRS resource ID). The handover command may further include an identifier of the target cell, or a logical identifier of the target cell, or a configuration identifier of the target cell. The terminal device may further determine, based on any one of the foregoing identifiers, an SRS resource of a to-be-sent SRS from an SRS resource indicated (or identified) by the SRS resource set identifier or the SRS resource identifier (SRS resource ID). For example, before the terminal device is handed over, there are a plurality of candidate cells (including the second cell), and an SRS resource #0 is configured for each of the plurality of candidate cells. The terminal device may determine, based on an SRS resource identifier corresponding to the SRS resource #0 and the identifier of the target cell (for example, the second cell), an SRS resource #0 configured for the second cell as the SRS resource of the to-be-sent the SRS. In addition, the handover command may include an SRS resource indicator (SRS resource indicator, SRI) field. The SRI field has a same meaning as an SRI field included in downlink control information (downlink control information, DCI), and may indicate the SRS resource set identifier or the SRS resource identifier. The terminal device may further determine, based on an SRI indicator, an SRS signal that needs to be sent.

In a possible design, before the first cell sends the SRS configuration information to the terminal device, the method further includes: The first cell receives a measurement result from the terminal device, where the measurement result includes a result of measuring one or more reference signals of the second cell by the terminal device; and the first cell determines, based on the measurement result, the at least one piece of downlink beam information associated with the at least one SRS resource.

In a possible design, before the first cell sends the SRS configuration information to the terminal device, the method further includes: The first cell sends a measurement result from the terminal device to the second cell, where the measurement result includes a result of measuring one or more reference signals of the second cell by the terminal device; and the second cell determines, based on the measurement result, the at least one piece of downlink beam information associated with the at least one SRS resource.

In a possible design, the handover command further includes SRS resource indication information, and that the second cell receives the SRS from the terminal device includes: the second cell receives the SRS from the terminal device on an SRS resource indicated by the SRS resource indication information.

In a possible design, the method further includes: The second cell receives the second TA from the terminal device; or the second cell receives first information from the first cell, where the first information includes the TA used by the terminal device in the first cell, and the time difference of arrival at the terminal device between the downlink reference signal of the first cell and the downlink reference signal of the second cell; and the second cell determines the second TA based on the first information and the adjustment amount.

According to a third aspect, an embodiment of this application provides a communication apparatus. The apparatus has a function of implementing the method in the first aspect. The function may be implemented by using hardware, or may be implemented by using hardware executing corresponding software. The hardware or the software includes one or more modules corresponding to the foregoing functions, for example, a transceiver unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method in the first aspect.

In a possible design, the apparatus may be an entire terminal device or a component of the terminal device.

According to a fourth aspect, an embodiment of this application provides a communication apparatus. The apparatus has a function of implementing the method in the second aspect. The function may be implemented by using hardware, or may be implemented by using hardware executing corresponding software. The hardware or the software includes one or more modules corresponding to the foregoing functions, for example, a transceiver unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method in the second aspect.

In a possible design, the apparatus may be an entire network device or a component of the network device.

According to a fifth aspect, an embodiment of this application provides a communication apparatus. The communication apparatus includes an interface circuit and a processor, and the processor and the interface circuit are coupled to each other. The processor is configured to implement the method according to the first aspect or the second aspect by using a logic circuit or by executing instructions. The interface circuit is configured to receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a radio transceiver, or an input/output interface.

Optionally, the communication apparatus may further include a memory, configured to store instructions executed by the processor, or store input data needed for running instructions by the processor, or store data generated after the processor runs instructions. The memory may be a physically independent unit, or may be coupled to the processor, or the processor includes the memory.

According to a sixth aspect, an embodiment of this application provides a computer-readable storage medium. The computer-readable storage medium stores a computer program or instructions. When the computer program or the instructions are executed by a processor, the method according to the first aspect or the second aspect can be implemented.

According to a seventh aspect, an embodiment of this application further provides a computer program product, including a computer program or instructions. When the computer program or the instructions are executed by a processor, the method according to the first aspect or the second aspect can be implemented.

According to an eighth aspect, an embodiment of this application further provides a chip system. The chip system includes a processor. The processor is configured to be coupled to a memory. The memory is configured to store a program or instructions. When the program or the instructions are executed by the processor, the method according to the first aspect or the second aspect can be implemented.

According to a ninth aspect, an embodiment of this application further provides a timing advance adjustment system. The system may include the terminal device in the first aspect and a network device configured to implement a function of the second cell in the second aspect.

In a possible design, the system may further include a network device configured to implement a function of the first cell in the second aspect.

For technical effects that can be achieved in the third aspect to the ninth aspect, refer to the technical effects that can be achieved in the first aspect. Details are not described herein again.

### BRIEF DESCRIPTION OF DRAWINGS

FIG. 1 shows a possible and non-limiting communication system architecture according to an embodiment of this application;
FIG. 2 is a diagram of a communication scenario according to an embodiment of this application;
FIG. 3 is a first diagram of a timing advance adjustment method according to an embodiment of this application;
FIG. 4 is a diagram of sending time and receiving time of a downlink reference signal according to an embodiment of this application;
FIG. 5 is a diagram of an association relationship between a reference signal and downlink beam information according to an embodiment of this application;
FIG. 6 is a second diagram of a timing advance adjustment method according to an embodiment of this application;
FIG. 7 is a first diagram of a structure of a communication apparatus according to an embodiment of this application;
FIG. 8 is a second diagram of a structure of a communication apparatus according to an embodiment of this application; and
FIG. 9 is a diagram of a structure of a communication system according to an embodiment of this application.

### DESCRIPTION OF EMBODIMENTS

This application provides a timing advance adjustment method and an apparatus. The method and the apparatus are based on a same technical concept. Because problem-resolving principles of the method and the apparatus are similar, mutual reference may be made to implementations of the apparatus and the method, and repeated parts are not described.

For ease of understanding by a person skilled in the art, before embodiments of this application are described, some terms in this application are first described.
(1) An air interface protocol layer (layer) includes a radio resource control (radio resource control, RRC) layer, a packet data convergence protocol (packet data convergence protocol, PDCP) layer, a radio link control (radio link control, RLC) layer, a medium access control (medium access control MAC) layer, a physical (physical, PHY) layer, and the like.
   In the 3rd generation partnership project (3rd generation partnership project, 3GPP) new radio (new radio access technology, NR) standard, the PHY layer is a bottom layer of the protocol layers, and is also referred to as layer 1 (layer 1, L1), and the MAC layer is the second layer of the protocol layers, and is also referred to as layer 2 (layer 2, L2).
(2) A beam (beam) is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a transmission configuration indicator (transmission configuration indicator, TCI)-state (state) parameter, or by a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are equivalent to each other. Alternatively, the beam may be replaced with another term representing the beam. This is not limited in this application.

A transmit end may send same information or different information by using different beams. Optionally, a plurality of beams having a same or similar communication feature may be considered as one beam. One beam may include one or more antenna ports, configured to transmit a data channel, a control channel, a sounding signal, and the like. An uplink transmission beam may be indicated by using any one of a spatial relationship, a TCI-state, or an SRS resource (which represents a transmission beam that uses the SRS). Therefore, the uplink transmission beam may alternatively be replaced with the SRS resource.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

For example, the transmission beam may be signal strength distribution formed in different directions in space after a signal is transmitted through an antenna, and the reception beam may be signal strength distribution, in different directions in space, of a radio signal received from an antenna. It may be understood that one or more antenna ports forming one beam may also be considered as one antenna port set.

When a low-frequency band or an intermediate-frequency band is used, the transmit end may send a signal in an omnidirectional manner or at a wide angle. When a high-frequency band is used, because of a small carrier wavelength in a high-frequency communication system, an antenna array including many antenna elements may be disposed at the transmit end and a receive end. The transmit end sends a signal by using a specific beamforming weight, so that the sent signal forms a spatially directional beam, and the receive end receives the signal by using the antenna array by using a specific beamforming weight. This helps increase received power of the signal at the receive end and resist a path loss.

(3) Quasi co-location/quasi-co-location (quasi co-location, QCL): A co-location relationship is used for representing that a plurality of resources have one or more same or similar communication features. Same or similar communication configurations may be used for a plurality of resources having a co-location relationship. For example, if two antenna ports have a co-location relationship, a large-scale channel characteristic of transmitting one symbol by one port may be deduced from a large-scale channel characteristic of transmitting one symbol by another port. The large-scale characteristic may include: a delay spread, an average delay, a Doppler spread, a Doppler frequency shift, an average gain, a receiving parameter, a receiving beam number of the terminal device, a transmission/reception channel correlation, a receiving angle of arrival, a spatial correlation of a receiver antenna, a dominant angle of arrival (angle of arrival, AoA), an average angle of arrival, an AoA spread, and the like. Co-location indication indicates whether at least two groups of antenna ports have a co-location relationship, that is, the co-location indication indicates whether channel state information reference signals sent by the at least two groups of antenna ports are from a same transmission point, or the co-location indication indicates whether channel state information reference signals sent by the at least two groups of antenna ports are from a same beam group. In other words, if there is a QCL relationship, the terminal device may inherit a receiving or sending parameter used when a reference signal is previously received, to receive or send a subsequent signal.

(4) Reference signal (reference signal, RS): According to the long term evolution (long term evolution, LTE)/NR protocol, at a physical layer, uplink communication includes transmission of a physical uplink channel and an uplink signal. The physical uplink channel includes a random access channel (random access channel, PRACH), a physical uplink control channel (physical uplink control channel, PUCCH), a physical uplink shared channel (physical uplink shared channel, PUSCH), and the like. The uplink signal includes a sounding reference signal (sounding reference signal, SRS), a physical uplink control channel de-modulation reference signal (PUCCH de-modulation reference signal, PUCCH-DMRS), an uplink phase noise tracking reference signal (phase noise tracking reference signal, PTRS), an uplink positioning reference signal (uplink positioning RS), and the like. Downlink communication includes transmission of a physical downlink channel and a downlink signal. The physical downlink channel includes a physical broadcast channel (physical broadcast channel, PBCH), a physical downlink control channel (physical downlink control channel, PDCCH), a physical downlink shared channel (physical downlink shared channel, PDSCH), and the like. The downlink signal includes a primary synchronization signal (primary synchronization signal, PSS)/secondary synchronization signal (secondary synchronization signal, SSS), a physical downlink control channel de-modulation reference signal (PDCCH de-modulation reference signal, PDCCH-DMRS), a physical downlink shared channel de-modulation reference signal (PDSCH de-modulation reference signal, PDSCH-DMRS), a downlink PTRS, a channel state information reference signal (channel state information reference signal, CSI-RS), a cell signal (cell reference signal, CRS) (not available in NR), and a time/frequency tracking reference signal (time/frequency tracking reference signal, TRS) (not available in LTE), an LTE/NR positioning signal (positioning RS), and the like.

(5) A transmission configuration indicator (transmission configuration indicator, TCI) is a field indicating quasi-co-location of PDSCH antenna ports. The TCI is configured by using RRC signaling, and is referred to as a TCI-state (state) in the RRC signaling. A higher layer configures one or more QCL relationships by using TCI-states, that is, configures one or more QCL relationships between downlink signals and PDSCH-DMRSs. After the RRC signaling is configured, the network device may send a MAC control element (control element, CE) to activate one or more TCI-states, and may further send downlink control information (downlink control information, DCI) to indicate one of a plurality of activated TCI-states.

The TCI includes one or two QCL relationships. The QCL represents a consistency relationship between a signal/channel to be received currently and a previously known reference signal. If there is a QCL relationship, the terminal device may inherit a receiving or sending parameter used when a reference signal is previously received, to receive or send an upcoming signal/channel.

The following describes configuration, activation, and indication of the TCI-state.

TCI-state configuration: The network device configures a plurality of TCI-states for the terminal device by using RRC signaling. Each of the TCI-states includes a piece of QCL-information (info) whose type (type) is typeD. Alternatively, the network device may configure a TCI-state that does not include the QCL-info whose type is typeD. However, the TCI-states do not indicate a data transmission beam. Therefore, details are not further described herein.

TCI-state activation: After configuring the plurality of TCI-states, the network device further needs to activate eight of the TCI-states by using the MAC CE. The eight TCI-states are in one-to-one correspondence with eight values of a TCI field in the DCI. In other words, specific eight TCI-states corresponding to the eight values of the TCI field in the DCI are determined by using the MAC CE.

TCI-state indication: The network device indicates a specific TCI-state by using the TCI field in the DCI. For example, a value of the TCI field in the DCI sent by the network device to the terminal device is 000, representing that a TCI-state corresponding to 000 is used for a data transmission beam. A reference signal included in QCL-info of typeD in the TCI-state is a channel state information reference signal (channel state information reference signal, CSI-RS) whose index is #1, representing that a beam for data transmission is the same as a receive beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, a beam corresponding to the data transmission beam, to send or receive data by using the corresponding beam.

It should be noted that the two description manners of the TCI-state and the TCI state in this specification may be interchanged.

(6) Common beam: Currently, each channel is indicated by using a separate beam. Each channel has a corresponding beam. In this application, a common beam is defined for a plurality of uplink and/or downlink channels.

Common beam: a same beam used by one or more channels, one or more types of channels, one or more reference signals, and/or one or more types of reference signals. The channel includes but is not limited to at least one of a PDCCH, a PDSCH, a PUCCH, a PUSCH, and a PRACH. The reference signal includes but is not limited to at least one of a synchronization signal and PBCH block (synchronization signal and PBCH block, SSB), a CSI-RS, a DMRS, a PTRS, a TRS, an SRS, and the like.

Joint (joint) common beam: The joint common beam is for both transmission of at least one uplink channel or at least one uplink reference signal and transmission of at least one downlink channel or at least one downlink reference signal, for example, a PDCCH, a PDSCH, a PUCCH, and a PUSCH. The joint common beam may also be referred to as an uplink and downlink common beam.

Uplink common beam: The uplink common beam is for transmission of a plurality of uplink channels, transmission of a plurality of types of uplink channels, and/or transmission of one or more uplink reference signals, for example, a PUCCH, a PUSCH, and an SRS.

Downlink common beam: The downlink common beam is for transmission of a plurality of downlink channels, transmission of a plurality of types of downlink channels, and/or transmission of one or more downlink reference signals, for example, a PDCCH, a PDSCH, and a CSI-RS.

Form of a common beam: The common beam may be of a newly defined structure (different from an existing TCI-state). For example, the common beam includes beam indication related information, including but not limited to one or more of the following: a common beam identifier (identifier, ID), a logical cell identifier (cell ID), a physical cell identifier, a bandwidth part identifier, a reference signal resource for determining a beam, a QCL type, an uplink power control related parameter (for example, a path loss measurement reference signal resource, expected received power p0, and a closed loop index (closedLoopIndex)), and an identifier of a path loss reference signal.

Application scope of the common beam: The common beam may be cell-specific, that is, one common beam is for transmission of a plurality of channels in one cell. The common beam may be at a BWP level, and is used for transmission of a plurality of beams in one BWP. The common beam may alternatively be cross-cell, that is, is for transmission of a plurality of channels of a plurality of cells. The plurality of cells may be a plurality of cells in one band (band). The plurality of cells may alternatively be a plurality of inter-band cells.

(7) TCI mode: The TCI mode includes a joint (joint) mode and a separate (separate) mode. The joint mode means that a same beam is used for both uplink transmission and downlink transmission between a network device and a terminal device. The separate mode means that different beams are used for uplink transmission between the network device and the terminal device and downlink transmission between the network device and the terminal device.

In addition, it should be noted that "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects.

In this application, "at least one" means one or more, and "a plurality of" means two or more. In the descriptions of this application, the terms such as "first" and "second" are merely used for distinguishing descriptions, and cannot be understood as an indication or implication of relative importance, or cannot be understood as an indication or implication of a sequence.

The foregoing describes some terms in embodiments of this application. The following describes a communication system architecture and an application scenario to which embodiments of this application are applicable.

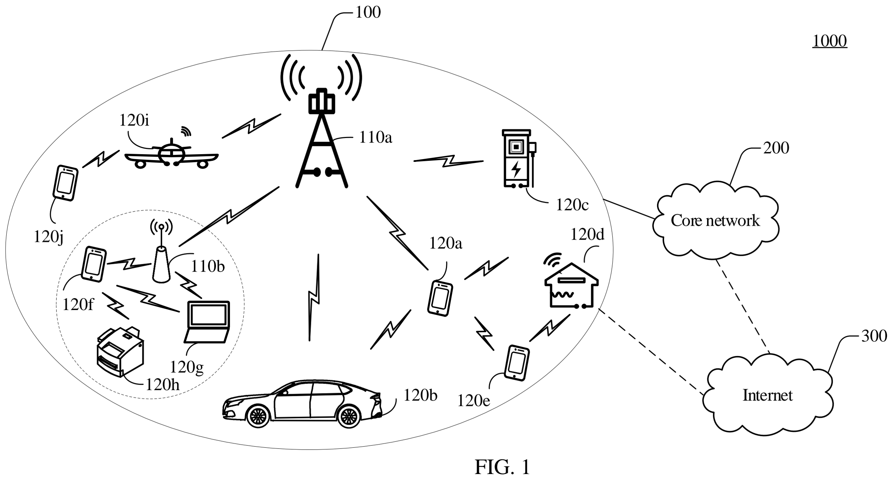

FIG. 1 shows a possible and non-limiting communication system architecture to which an embodiment of this application is applicable. As shown in FIG. 1, the communication system 1000 includes a radio access network (radio access network, RAN) 100, and a core network (core network, CN) 200. Optionally, the communication system 1000 may further include an internet 300. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a 3GPP-related cellular system, for example, a 4th generation (4th generation, 4G) communication system, a 5th generation (5th generation, 5G) mobile communication system, or an evolved system after 5G (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in a radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, network elements 110a and 110b in FIG. 1 may be understood as communication apparatuses having a base station function, and the network elements 120a to 120j may be understood as communication apparatuses having a terminal device function.

In a possible scenario, the network device may be a base station (base station), an evolved base station (evolved NodeB, eNodeB), a transmission reception point (transmission reception point, TRP), a transmission point (transmission point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1), a micro base station or an indoor station (for example, 110b in FIG. 1), a relay node or a donor node, or a radio controller in a CRAN scenario. The network device may alternatively be a device having a base station function in device to device (device to device, D2D) communication, internet of vehicles communication, unmanned aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of network devices collaborate to assist the terminal device in implementing wireless access, and different network devices separately implement some base station functions. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

A form of the network device is not limited in embodiments of this application. An apparatus for implementing a function of a network device may be a network device, or may be an apparatus, for example, a chip system, that can enable a network device to implement the function. The apparatus may be mounted in the network device or used in conjunction with the network device.

The terminal device 120 may also be referred to as a terminal, user equipment (user equipment, UE), a mobile station (mobile station, MS), a mobile terminal (mobile terminal, MT), or the like, or is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having functions of a terminal. For example, the terminal device may alternatively be a device that functions as a terminal in D2D communication.

A device form of the terminal device is not limited in embodiments of this application. An apparatus for implementing a function of a terminal device may be a terminal device, or may be an apparatus, for example, a chip system, that can enable a terminal device to implement the function. The apparatus may be mounted in a terminal device or used in a manner of matching a terminal device. In this embodiment of this application, the chip system may include a chip, or may include a chip and another discrete component.

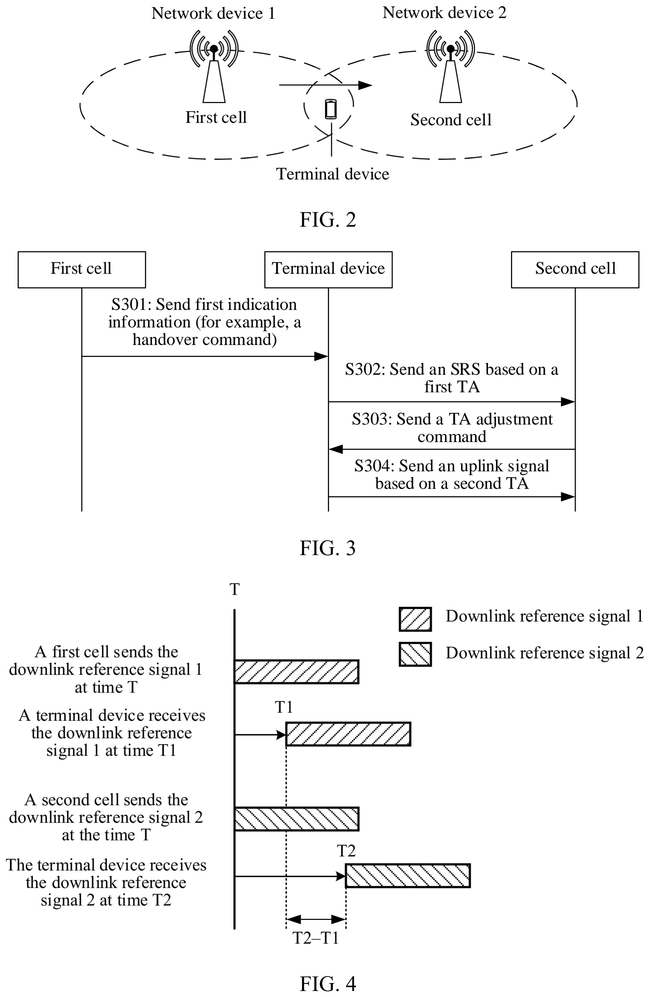

Based on the communication system architecture shown in FIG. 1, a communication solution provided in embodiments of this application relates to inter-cell handover of a terminal device. In other words, the terminal device is handed over from one cell to another cell. A cell from which the terminal device is handed over may be referred to as a serving cell, a source serving cell, or a source (source) cell, and a cell to which the terminal device is handed over or to be handed over may be referred to as a target (target) cell or a target serving cell. For ease of description, in embodiments of this application, the cell from which the terminal device is handed over is referred to as a first cell, and the cell to which the terminal device is handed over or to be handed over is referred to as a second cell. FIG. 2 is a diagram of a communication scenario. A terminal device performs communication in a first cell. Due to mobility of the terminal device or another reason, the terminal device may be handed over to a second cell. After the handover, the terminal device communicates with the second cell. In this embodiment of this application, the first cell and the second cell may be served by a same network device, or may be served by different network devices. That the terminal device communicates with the first cell may be understood as that the terminal device communicates with a network device in the first cell. Similarly, that the terminal device communicates with the second cell may be understood as that a terminal device communicates with the network device in the second cell. In addition, in this embodiment of this application, a plurality of carrier components (carrier component, CC) may be configured for each cell, and carrier components between different cells may be the same, or may be different, or may be partially the same. For example, a carrier component CC1 and a carrier component CC2 may be configured for the first cell, and the carrier component CC2 and a carrier component CC3 may be configured for the second cell.

The following describes in detail embodiments of this application with reference to accompanying drawings.

FIG. 3 is a diagram of a timing advance adjustment method according to an embodiment of this application. In FIG. 3, an example in which a terminal device, a first cell, and a second cell are used as execution entities is used to illustrate the method. It may be understood that the terminal device may alternatively be a component (for example, a processor, a chip, or a chip system) of the terminal device or an apparatus used together with the terminal device; the first cell may alternatively be a network device in the first cell (for example, a network device 1 in the first cell in FIG. 2), a component (for example, a processor, a chip, or a chip system) of the network device in the first cell, or an apparatus used together with the network device in the first cell; and the second cell may alternatively be a network device in the second cell (for example, a network device 2 in the second cell in FIG. 2), a component (for example, a processor, a chip, or a chip system) of the network device in the second cell, or an apparatus used together with the network device in the second cell. In addition, the first cell may alternatively be a DU of the first cell, and the second cell may alternatively be a DU of the second cell. The DU of the first cell may be the same as or different from the DU of the second cell. The method includes the following steps.

S301: The first cell sends first indication information to the terminal device, and correspondingly, the terminal device receives the first indication information.

The first indication information may also be referred to as a handover command, a handover instruction, or the like, and may instruct to hand over the terminal device to the second cell (or instruct to hand over the terminal device from the first cell to the second cell). The first indication information may be L1 or L2 layer signaling, or may be indication information carried in the L1 or L2 layer signaling.

In an example, when signal quality of the first cell is less than a first threshold, signal quality of the second cell is greater than or equal to a second threshold, and/or the like, the first cell may indicate to perform cell handover of the terminal device, and the first cell may send MAC CE signaling (the L2 layer signaling) to the terminal device. The MAC CE signaling indicates to hand over the terminal device to the second cell. For example, the MAC CE signaling may include one or more of an identifier of the second cell, a logical identifier of the second cell, a configuration identifier of the second cell, carrier component information of the second cell, and the like, to indicate the terminal device to be handed over from the first cell to the second cell.

S302: The terminal device sends an SRS to the second cell based on a first TA, and correspondingly, the second cell receives the SRS.

In this embodiment of this application, the first indication information may be further used for triggering the terminal device to send the SRS to the second cell, or triggering the terminal device to send the SRS to the second cell based on the first TA. After receiving the first indication information from the first cell, the terminal device may send the SRS to the second cell based on the first TA.

For the first TA, in a possible implementation, if the terminal device previously accessed the second cell, the terminal device may determine the first TA based on a TA used for previously accessing the second cell.

In another possible implementation, the terminal device may alternatively determine the first TA based on a TA used in the first cell and a time difference of arrival between a downlink reference signal of the first cell and a downlink reference signal of the second cell.

For example, the first cell and the second cell send downlink reference signals at the same time, and a first distance between the terminal device and a position at which the first cell sends the downlink reference signal is less than a second distance between the terminal device and a position at which the second cell sends the downlink reference signal. Refer to a diagram of sending time and receiving time of downlink reference signals shown in FIG. 4. The first cell and the second cell respectively send a downlink reference signal 1 and a downlink reference signal 2 at time T. Because the first distance is less than the second distance, the terminal device first receives the downlink reference signal 1 from the first cell at time T1, and then receives the downlink reference signal 2 from the second cell at time T2 that is later than the time T1. Therefore, a difference between T2 and T1, namely, the time difference of arrival between the downlink reference signal of the first cell and the downlink reference signal of the second cell, may represent additional duration needed for one-way signal transmission between the terminal device and the second cell in comparison with one-way signal transmission between the terminal device and the first cell. The TA may be essentially considered as a negative offset between start time at which the terminal device receives a downlink subframe and time at which the terminal device transmits an uplink subframe, and is used for controlling an uplink signal from the terminal device to fall within a CP range. Therefore, in this embodiment of this application, the TA used by the terminal device in the first cell may be compensated or adjusted based on the time difference of arrival between the downlink reference signal of the first cell and the downlink reference signal of the second cell, to obtain the first TA applicable to the second cell.

In an example, the terminal device may determine the first TA according to TA1=TA+M*RSTD, where TA1 represents the first TA, TA represents the TA used by the terminal device in the first cell, the reference signal time difference (reference signal time difference, RSTD) represents the time difference of arrival between the downlink reference signal of the first cell and the downlink reference signal of the second cell, M represents an adjustment coefficient, and M may be 1, 2, or the like.

In addition, considering that time at which the first cell sends the downlink reference signal may be asynchronous with time at which the second cell sends the downlink reference signal, the terminal device may determine the first TA according to TA1=TA+M*RSTD+N, where N represents a compensation amount for calculation of the first TA, and a value of N may be provided or indicated by the first cell to the terminal device. When the first cell does not provide or indicate the value of N to the terminal device, N may alternatively be 0. For example, the value of N may be determined by the first cell or the second cell based on a difference between time of sending the downlink reference signal by the first cell and time of sending the downlink reference signal by the second cell, and is indicated by the first cell to the second cell by using signaling.

In addition, it should be understood that, when there are a plurality of downlink beams in a cell (for example, the first cell or the second cell), time of arrival of a downlink reference signal of the cell may be time at which a downlink reference signal corresponding to a downlink beam in the cell arrives at the terminal device, or may be time of arrival at the terminal device obtained by performing a weighted averaging operation and the like on time at which downlink reference signals corresponding to some or all downlink beams in the cell arrive at the terminal device. This is not limited in this application.

In a possible implementation, the first indication information may include SRS resource indication information. The terminal device may further send, based on the first TA, the SRS to the second cell on an SRS resource indicated by the SRS resource indication information.

For example, the first indication information (which may also be referred to as the handover command) is L2 layer MAC CE signaling. The MAC CE signaling may include a first field and a second field. The first field may carry information indicating the terminal device to be handed over from the first cell to the second cell, and the second field may carry the SRS resource indication information. In addition, it should be understood that the first indication information carrying the SRS resource indication information is merely an example. It may be understood that the SRS resource indication information may alternatively be sent to the terminal device by using second indication information including the SRS resource indication information. The first indication information and the second indication information may be different signaling, or may be information carried in different fields in same signaling. This is not limited in this application.

In another possible implementation, before sending the handover command to the terminal device, the first cell may further send SRS resource information to the terminal device, where the SRS configuration information is used for configuring at least one SRS resource of the second cell. The SRS configuration information may be determined by the second cell and then sent to the first cell, and delivered by the first cell to the terminal device. The terminal device may further send, based on the first TA, the SRS to the second cell on an SRS resource on a first SRS resource that belongs to the at least one SRS resource.

It should be understood that, in this embodiment of this application, the SRS resource may include a time domain resource and a frequency domain resource, and may further include an SRS resource type (for example, used for uplink channel measurement or beam management). In addition, the SRS resource may alternatively be an aperiodic (aperiodic) SRS resource, and is triggered by the first indication information (such as the handover command). The SRS resource may alternatively be a periodic (periodic) SRS resource, and the periodic SRS resource may be periodically valid after the terminal device receives the first indication information or the like. The SRS resource may alternatively be a semi-persistent (semi-persistence) SRS resource, and the semi-persistent SRS resource may be periodically valid after the terminal device receives the first indication information or the like, and may become invalid after the terminal device receives downlink scheduling, a TA adjustment command, or deactivation signaling from a cell (for example, the second cell).

In still another possible implementation, the at least one SRS resource may be further associated with at least one piece of downlink beam information of a downlink beam in the second cell, and an association relationship between the at least one piece of downlink beam information and the at least one SRS resource is delivered to the terminal device by using the SRS resource information. The first indication information sent by the first cell to the terminal device further includes first downlink beam information, so that the terminal device may further determine, based on the association relationship between the at least one piece of downlink beam information and the at least one SRS resource, a first SRS resource corresponding to the first downlink beam information, and send the SRS to the second cell on the first SRS resource based on the first TA.

The association relationship between the at least one piece of downlink beam information and the at least one SRS resource may be configured by the first cell or the second cell, and is sent to the terminal device by the first cell.

An example in which the association relationship between the at least one piece of downlink beam information and the at least one SRS resource is configured by the second cell is used for description. In some implementations, before being handed over to the second cell, for example, before receiving the handover command from the first cell, the terminal device may further send (or report) a measurement result of the second cell to the first cell. The measurement result may include a result of measuring one or more reference signals of the second cell by the terminal device. After receiving the measurement result, the first cell may send the measurement result to the second cell, and the second cell may perform SRS resource configuration based on the measurement result, or configure, for at least one configured SRS resource based on the measurement result, downlink beam information associated with the at least one configured SRS resource.

In an example, the second cell may include one or more downlink beams, and a corresponding reference signal (reference signal, RS) may be configured for each downlink beam. The terminal device may measure one or more RSs (namely, one or more RSs corresponding to the one or more beams) of the second cell, to determine a measurement result. The measurement result may include signal quality of the one or more RSs of the second cell. After receiving the measurement result from the terminal device, the terminal device may select N RSs in descending order of signal quality, where N is an integer greater than or equal to 1, and perform SRS resource configuration on N downlink beams corresponding to the N RSs, to allocate an SRS resource to each of the N downlink beams. After allocating the SRS resource to each of the N downlink beams, the second cell may send, to the first cell, SRS configuration information that includes association relationships between downlink beam information of the N downlink beams and allocated N SRS resources, and the first cell sends the SRS configuration information to the terminal device.

In this embodiment of this application, downlink beam information of a downlink beam includes one or more of information that may be used for identifying or determining the downlink beam, such as an RS index, a TCI-state ID, and BWP information corresponding to the downlink beam.

In this embodiment of this application, the RS may be a synchronization signal and PBCH block (synchronization signal and PBCH block, SSB), a CSI-RS, or the like. The SSB includes three parts: PSS, SSS, and PBCH. When the RS is an SSB, the RS index may be an SSB index. When the RS is a CSI-RS, the RS index may be a CSI-RS resource (resource) index. There are two possible modes for the TCI-state ID. In a joint (joint) mode, a TCI-state identified by the TCI-state ID may be used to determine both a downlink beam and an uplink beam. In other words, a TCI-state identified by a TCI-state ID corresponding to a downlink beam may be used for determining the downlink beam, and may be used for determining an uplink beam. In a separate (separate) mode, the TCI-state ID can identify one or two TCI-states, any one of the one or two TCI-states can be used for determining only an uplink beam or a downlink beam, and the one or two TCI-states include one uplink TCI-state and/or one downlink TCI-state. The BWP information may include an uplink BWP ID and/or a downlink BWP ID. In this embodiment of this application, BWP information corresponding to a downlink beam may include a BWP ID used for determining a TCI-state corresponding to the downlink beam, and may be further used for determining an uplink BWP for SRS sending.

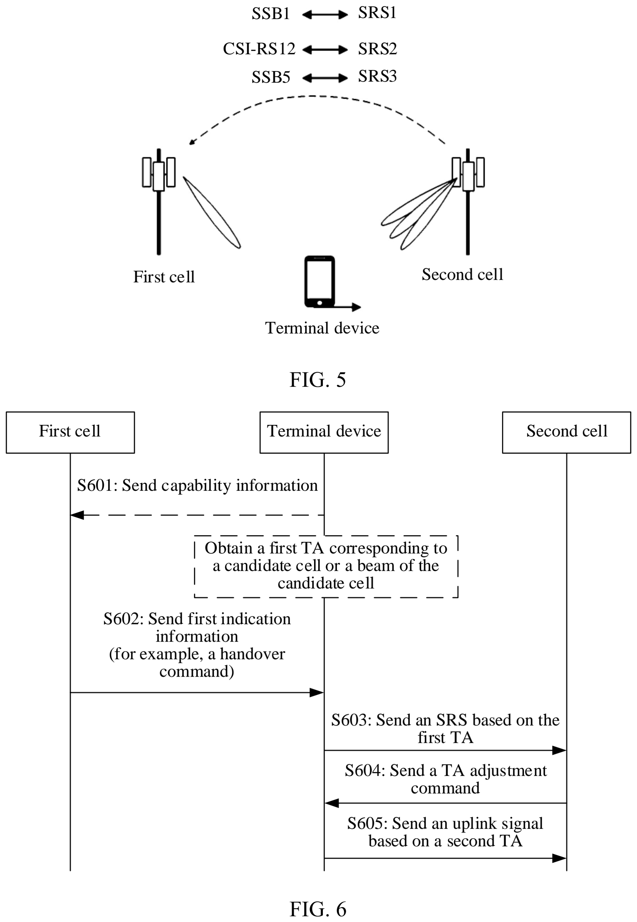

For example, N is 3, and the downlink beam information is an RS index corresponding to the downlink beam. An example of association relationships between RSs identified by three RS indexes and three SRS resources is shown in FIG. 5. An SSB1 is associated with a resource for an SRS1, a CSI-RS12 is associated with a resource for an SRS2, and an SSB5 is associated with a resource for an SRS3. The downlink beam information included in the first indication information is an SSB index of the SSB1, and in this case, the terminal device may determine to send the SRS by using the resource that is for the SRS1 and that is associated with the SSB1. It should be understood that in this embodiment of this application, SRS resources associated with different RS indexes (or RSs identified by different RS indexes) may be the same or different. For example, a CSI-RS resource index identifying the CSI-RS12 and an SSB index identifying the SSB5 may be associated with a same SRS resource, for example, the resource for the SRS2.

For a communication system that uses a high frequency band, such as 5G, the terminal device usually sends a signal in a non-omnidirectional manner. For an uplink beam for sending the SRS, if an SRS resource includes a configuration of an uplink beam, the terminal device may send the SRS on the corresponding uplink beam based on the configuration of the uplink beam included in the SRS resource. If the SRS resource does not include a configuration of an uplink beam, in a possible implementation, if the downlink beam information included in the first indication information includes an RS index, the terminal device may determine, based on an antenna array parameter (or a spatial domain filter) for receiving an RS identified by the RS index, an antenna array parameter (or a spatial domain filter) for sending the SRS. In other words, the terminal device may determine, based on the antenna array parameter (or the spatial filter) for receiving the RS identified by the RS index, an antenna array parameter (or a spatial filter) of a beam for sending the SRS.

In another possible implementation, if the downlink beam information included in the first indication information is a TCI-state ID, the terminal device may alternatively determine, based on a QCL relationship or a reference signal indicated by the TCI-state ID, the uplink beam for sending the SRS.

In still another possible implementation, if the uplink beam for sending the SRS is preconfigured, the terminal device may alternatively send the SRS by using the preconfigured beam.

The terminal device may determine, by using a power control (power control, PC) parameter configured in the SRS resource for sending the SRS, power for sending the SRS, or may determine, by using a PC parameter indicated by the first cell or the second cell by using a TCI or the like, power for sending the SRS, or may determine, by using a preconfigured PC parameter, power for sending the SRS. This is not limited in this application.

In addition, in some implementations, the terminal device may further calculate a downlink loss of the second cell by using, as a path loss reference signal (path loss reference signal, PL-RS), a downlink RS of the second cell and used during RSTD measurement, and compensate, based on the downlink loss, the power for sending the SRS.

S303: The second cell sends a TA adjustment command to the terminal device, and correspondingly, the terminal device receives the TA adjustment command.

After sending the SRS, the terminal device may monitor a PDCCH (or a specific control resource set (CORESET) of the PDCCH) of the second cell, and monitor the TA adjustment command from the second cell. The TA adjustment command includes an adjustment amount for the first TA.

In a possible implementation, the second cell may determine the adjustment amount for the first TA based on a difference between expected time for receiving the SRS and actual time for receiving the SRS. The expected time for receiving the SRS may be determined by the second cell based on a time range of a CP closest to time for receiving the SRS. For example, the expected time for receiving the SRS is start time or end time of the CP, or any time within the time range of the CP.

In a possible implementation, the second cell may alternatively determine the adjustment amount for the first TA based on a difference between time at which the SRS from the terminal device is received and time at which an uplink signal from another terminal device is received. Alternatively, the second cell may determine the adjustment amount for the first TA based on a relationship between an uplink receiving time window before downlink sending time and time at which the SRS from the terminal device is received.

In some implementations, the TA adjustment command may be further used as beam selection acknowledgment signaling. After the TA adjustment command is sent by the second cell, the terminal device and/or the second cell may further use a beam associated with the SRS as a common beam. For example, the terminal device and the second cell may use a downlink beam corresponding to the first downlink beam information as a downlink common beam, and subsequently, the downlink beam may be used for transmission of a PDCCH/PDSCH and the like.

S304: The terminal device sends an uplink signal to the second cell based on a second TA, and correspondingly, the second cell receives the uplink signal.

The second TA is determined by the terminal device based on the first TA and the adjustment amount that is for the first TA and that is included in the TA adjustment command. In an example, the terminal device may determine the second TA according to TA2=TA1+ΔT, where TA1 represents the first TA, TA2 represents the second TA, and ΔT represents the adjustment amount.

After determining the second TA, the terminal device may send the uplink signal to the second cell based on the second TA. The uplink signal may be uplink data, uplink signaling, or an uplink reference signal. Specific content of the uplink signal is not limited in this application.

In some implementations, to further ensure reliability of uplink transmission, the terminal device may send the uplink signal only after determining the second TA.

In some implementations, TA valid time (or effective time) of the second cell may be calculated after the terminal device receives the adjustment amount for the first TA and adjusts the first TA, that is, calculated after the terminal device receives the TA adjustment command or determines the second TA. Optionally, the terminal device may release a connection to the first cell after receiving the TA adjustment command.

In addition, to prevent a TA used by the terminal device from exceeding a preset TA range after the second cell re-adjusts the second TA used by the terminal device when the terminal device moves or the like, the terminal device may further report the second TA to the second cell after determining the second TA, or the first cell or the terminal device sends, to the second cell, first information that includes the TA used by the terminal device in the first cell, and the time difference of arrival at the terminal device between the downlink reference signal of the first cell and the downlink reference signal of the second cell, so that the second cell determines the second TA currently used by the terminal device.

In addition, it should be understood that the timing advance adjustment method is described by using an example in which the terminal device sends the SRS after receiving the handover command. It may be understood that the terminal device may alternatively send the SRS to the second cell based on the first TA at any time node during the handover from the first cell to the second cell, to perform the foregoing steps S302 to S304.

In some implementations, before the first cell sends the first indication information to the terminal device to trigger the terminal device to send the SRS, the first cell may further receive capability information reported by the terminal device, and determine that the terminal device has a TA determining capability. Refer to a diagram of a timing advance adjustment method shown in FIG. 6. The method includes:

S601: A terminal device sends capability information to a first cell, and correspondingly, the first cell receives the capability information.

When it is determined that the terminal device supports determining a TA based on an SSB, the first cell may perform S602.

S602: The first cell sends first indication information to the terminal device, and correspondingly, the terminal device receives the first indication information.

The first indication information may also be referred to as a handover command, a handover instruction, or the like, and may instruct to hand over the terminal device to a second cell. The first indication information may be L1 or L2 layer signaling, or may be indication information carried in the L1 or L2 layer signaling.

S603: The terminal device sends an SRS to the second cell based on a first TA, and correspondingly, the second cell receives the SRS.

For the first TA applicable to the second cell, in a possible implementation, the terminal device may determine the first TA based on a TA used in the first cell and a time difference of arrival between a downlink reference signal of the first cell and a downlink reference signal of the second cell.

S604: The second cell sends a TA adjustment command to the terminal device, and correspondingly, the terminal device receives the TA adjustment command.

The TA adjustment command includes an adjustment amount for the first TA.

S605: The terminal device sends an uplink signal to the second cell based on a second TA, and correspondingly, the second cell receives the uplink signal.

In a possible implementation, to ensure reliability of uplink transmission, the first TA may be used only by the terminal device to send the SRS, or send some specially configured signals, such as an SRS and a PUCCH, or send an uplink signal that is not uplink data. After the terminal device determines the second TA, the terminal device can send uplink data, such as a PUSCH, based on the second TA.

For implementations of S602 to S605, refer to implementations of S301 to S304 in FIG. 3. Details are not described herein again.

In this embodiment of this application, the capability information of the terminal device may indicate one or more of whether the terminal device supports determining a TA based on an SSB, whether the terminal device supports determining a TA based on a CSI-RS, whether the terminal device supports determining a downlink time difference of arrival based on an SSB, whether the terminal device supports determining a downlink time difference of arrival based on a CSI-RS, whether the terminal device supports determining a TA based on a downlink reference signal, whether the terminal device supports determining a time difference of arrival based on a downlink reference signal, and the like. The capability information of the terminal device may further include one or more of a type of a downlink reference signal that the terminal device supports for obtaining a TA, a maximum quantity that is of neighboring cells and that the terminal device supports for obtaining a TA based on a downlink reference signal, for each neighboring cell, a maximum quantity that is of TAs and that the terminal device supports for obtaining the neighboring cell based on a downlink reference signal, and the like.

That the terminal device has a capability of determining a TA may mean one or more of that the terminal device supports determining a TA based on an SSB, the terminal device supports determining a TA based on a CSI-RS, the terminal device supports determining a TA based on a CSI-RS, the terminal device supports determining a downlink time difference of arrival based on an SSB, the terminal device supports determining a downlink time difference of arrival based on a CSI-RS, the terminal device supports determining a TA based on a downlink reference signal, the terminal device supports determining a time difference of arrival based on a downlink reference signal, and the like.

In some implementations, after reporting the capability information to the first cell, the terminal device may further obtain the first TA corresponding to a candidate cell (for example, the second cell) or a beam of the candidate cell.

In a possible implementation, the first cell may (explicitly or implicitly) indicate, by using signaling, a TA of a candidate cell that the terminal device needs to obtain, or indicate a downlink reference signal that the terminal needs for obtaining a TA, or indicate a downlink reference signal that is of a candidate cell and that the terminal device needs to measure to obtain a TA. An indication method includes performing indication by using signaling such as MAC CE, where the signaling may include an identity of the candidate cell (for example, the second cell) and/or an identity of a downlink reference signal. The terminal device may measure the candidate cell (for example, the second cell) and/or a beam of the candidate cell (a downlink beam corresponding to an identifier of a downlink reference signal of the candidate cell indicated by the signaling) based on signaling from the first cell, to obtain time of arrival of the downlink reference signal of the candidate cell and/or the beam of the candidate cell, and determine a time difference of arrival between a downlink reference signal of the candidate cell and the downlink reference signal of the second cell based on time of arrival of the downlink reference signal of the first cell, to further determine the first TA applicable to the candidate cell.

In still another possible implementation, the terminal device may further determine a downlink reference signal of a candidate cell with highest signal quality or a non-serving cell with highest signal quality based on a measurement result that is of a reference signal of a candidate cell and that is reported through L1 measurement, measure the downlink reference signal of the candidate cell or the non-serving cell, to obtain time of arrival of the downlink reference signal of the candidate cell or the non-serving cell, and determine a time difference of arrival between a downlink reference signal of the candidate cell or the non-serving cell and the downlink reference signal of the second cell based on time of arrival of the downlink reference signal of the first cell, to further determine the first TA applicable to the candidate cell or the non-serving cell.

It should be understood that in this embodiment of this application, there may be one or more candidate cells. After receiving the first indication information, the terminal device may search, based on the second cell indicated by the first indication information and to which the terminal device needs to be handed over, determined one or more first TAs applicable to the one or more candidate cells for the first TA applicable to the second cell.

In addition, when the terminal device measures the downlink reference signal, the measurement is related to a capability of the terminal device. For example, if the terminal device supports only determining a TA based on an SSB, a reference signal measured by the terminal device is an SSB. Similarly, if the terminal device supports only determining a TA based on a CSI-RS, a reference signal measured by the terminal device is a CSI-RS.

In addition, it should be understood that the foregoing implementation in which the terminal device sends the SRS after receiving the handover command may be further compatible with a procedure in which the terminal device obtains the first TA in another manner. For example, before the terminal device is handed over from the first cell to the second cell, the terminal device may further send a random access request to the second cell, to obtain the first TA through random access. When the terminal device obtains the first TA in another manner, the handover command may still trigger the terminal device to send the SRS. Certainly, the terminal device may alternatively autonomously send the SRS to the second cell based on the first TA at any time node during the handover from the first cell to the second cell.

It may be understood that, to implement functions in the foregoing method embodiments, the terminal device, the first cell (or the network device in the first cell), and the second cell (or the network device in the second cell) include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

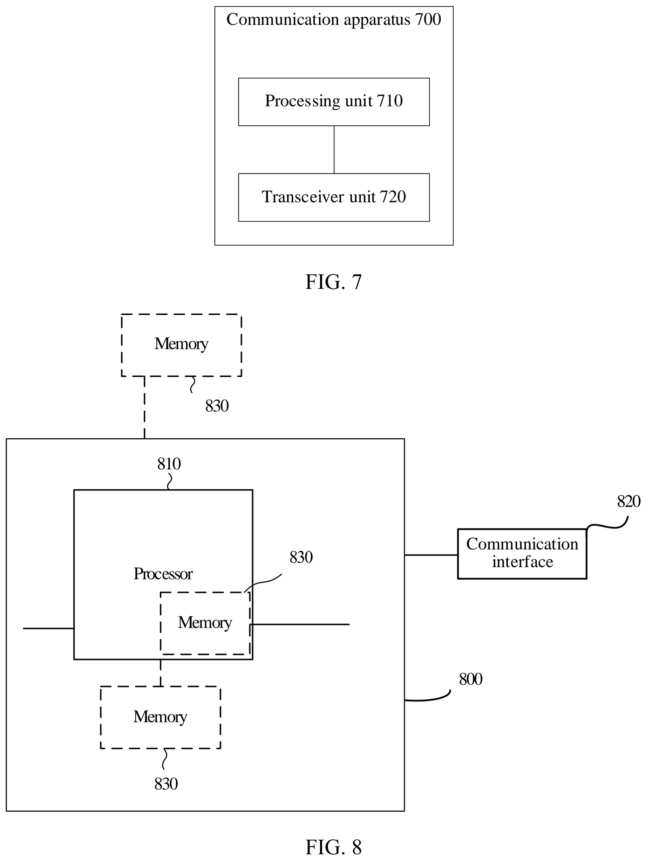

FIG. 7 and FIG. 8 are diagrams of possible structures of communication apparatuses according to embodiments of this application. These communication apparatuses may be configured to implement functions of the terminal device, the first cell (or the network device in the first cell), or the second cell (or the network device in the second cell) in the foregoing method embodiments. Therefore, beneficial effects of the foregoing method embodiments can also be achieved.

As shown in FIG. 7, the communication apparatus 700 includes a processing unit 710 and a transceiver unit 720. The transceiver unit 720 may alternatively be an interface unit, an input/output interface, or the like. The communication apparatus 700 may be configured to implement functions of the terminal device, the first cell (or the network device in the first cell), or the second cell (or the network device in the second cell) in the foregoing method embodiments. The transceiver unit 720 may be configured to implement sending-related operations and/or receiving-related operations on a side of the terminal device, the first cell (or the network device of the first cell), or the second cell (or the network device of the second cell) in the foregoing method embodiments.

Optionally, the transceiver unit 720 may include a sending unit and/or a receiving unit. The sending unit is configured to perform the sending-related operations on the side of the terminal device, the first cell (or the network device of the first cell), or the second cell (or the network device of the second cell) in the foregoing method embodiments. The receiving unit is configured to perform the receiving-related operations on the side of the terminal device, the first cell (or the network device of the first cell), or the second cell (or the network device of the second cell) in the foregoing method embodiments.

It should be noted that the communication apparatus 700 may include the sending unit, but does not include the receiving unit. Alternatively, the communication apparatus 700 may include the receiving unit, but does not include the sending unit. This may be specifically determined depending on whether the foregoing solution performed by the communication apparatus 700 includes a sending action and a receiving action.

When the communication apparatus 700 is a chip, the chip includes a transceiver unit and a processing unit. The transceiver unit may be an input/output circuit or a communication interface. The processing unit is a processor, a microprocessor, an integrated circuit, or a logic circuit integrated on the chip.

When the communication apparatus 700 is configured to implement functions of the terminal device in the foregoing method embodiments:

The transceiver unit 720 is configured to receive a handover command from the first cell, where the handover command instructs to perform handover to the second cell. The processing unit 710 is configured to determine a first TA. The transceiver unit 720 is further configured to send an SRS to the second cell based on the first TA; receive a TA adjustment command from the second cell, where the TA adjustment command includes an adjustment amount for the first TA, and the adjustment amount is determined by the second cell based on the received SRS; and send an uplink signal to the second cell based on a second TA, where the second TA is determined by the processing unit 710 based on the first TA and the adjustment amount.

In a possible design, the processing unit 710 determines the first TA based on a TA used in the first cell and a time difference of arrival between a downlink reference signal of the first cell and a downlink reference signal of the second cell; or determines the first TA based on a TA previously used for accessing the second cell.

In a possible design, the handover command is further used for triggering sending of the SRS to the second cell.

In a possible design, the handover command further includes first downlink beam information. Before receiving the handover command from the first cell, the transceiver unit 720 is further configured to receive SRS configuration information from the first cell, where the SRS configuration information includes at least one SRS resource used for configuring the second cell. When sending the SRS to the second cell based on the first TA, the transceiver unit 720 is specifically configured to send the SRS to the second cell on a first SRS resource based on the first TA, where the first SRS resource belongs to the at least one SRS resource.

In a possible design, the SRS configuration information further includes an association relationship between at least one piece of downlink beam information and the at least one SRS resource, the handover command further includes first downlink beam information, and the first downlink beam information belongs to the at least one piece of downlink beam information; and the first SRS resource is an SRS resource that is in the at least one SRS resource and that has an association relationship with the first downlink beam information.

In a possible design, the downlink beam information includes one or more of the following: an RS index, a TCI-state ID, and BWP information corresponding to a downlink beam.

In a possible design, before receiving the SRS configuration information from the first cell, the transceiver unit 720 is further configured to send a measurement result of the second cell to the first cell, where the measurement result includes a measurement result of one or more reference signals of the second cell, and is used by the first cell or the second cell to determine the at least one piece of downlink beam information associated with the at least one SRS resource.

In a possible design, the handover command further includes SRS resource indication information, and when sending the SRS to the second cell based on the first TA, the transceiver unit 720 is specifically configured to send, based on the first TA, the SRS to the second cell on an SRS resource indicated by the SRS resource indication information.

In a possible design, the transceiver unit 720 is further configured to send the second TA to the second cell.

When the communication apparatus 700 is configured to implement functions of the first cell (or the network device of the first cell) in the foregoing method embodiment:

The processing unit 710 is configured to generate a handover command, where the handover command instructs to hand over the terminal device to the second cell. The transceiver unit 720 is configured to send the handover command to the terminal device. Optionally, the handover command is further used for triggering the terminal device to send the SRS to the second cell.

In a possible design, before sending the handover command to the terminal device, the transceiver unit 720 is further configured to send SRS configuration information to the terminal device, where the SRS configuration information is used for configuring at least one SRS resource of the second cell. Optionally, the SRS configuration information further includes an association relationship between at least one piece of downlink beam information and the at least one SRS resource, and the handover command further includes first downlink beam information.

In a possible design, the downlink beam information includes one or more of the following: an RS index, a TCI-state ID, and BWP information corresponding to a downlink beam.

In a possible design, before sending the SRS configuration information to the terminal device, the transceiver unit 720 is further configured to receive a measurement result from the terminal device, where the measurement result includes a result of measuring one or more reference signals of the second cell by the terminal device; and the processing unit 710 is further configured to determine, based on the measurement result, the at least one piece of downlink beam information associated with the at least one SRS resource.

In a possible design, before sending the SRS configuration information to the terminal device, the transceiver unit 720 is further configured to send, to the second cell, the measurement result from the terminal device, where the measurement result includes the result of measuring one or more reference signals of the second cell by the terminal device.

In a possible design, the handover command further includes SRS resource indication information.

In a possible design, the transceiver unit 720 is further configured to send first information to the second cell, where the first information includes a TA used by the terminal device in the first cell, and a time difference of arrival at the terminal device between a downlink reference signal of the first cell and a downlink reference signal of the second cell.

When the communication apparatus 700 is configured to implement functions of the second cell (or the network device of the second cell) in the foregoing method embodiment:

The transceiver unit 720 is configured to receive an SRS from the terminal device, where the SRS is sent by the terminal device based on a first TA. The processing unit 710 is configured to determine a TA adjustment command based on the received SRS, where the TA adjustment command includes an adjustment amount for the first TA. The transceiver unit 720 is further configured to send the TA adjustment command to the terminal device; and receive an uplink signal from the terminal device. The uplink signal is sent by the terminal device based on a second TA, and the second TA is determined by the terminal device based on the first TA and the adjustment amount. The first TA may be determined based on a TA used by the terminal device in the first cell, and a time difference of arrival at the terminal device between a downlink reference signal of the first cell and a downlink reference signal of the second cell, or determined based on a TA previously used by the terminal device for accessing the second cell.

In a possible design, when receiving the SRS from the terminal device, the transceiver unit 720 is specifically configured to receive the SRS from the terminal device on a first SRS resource, where the first SRS resource belongs to at least one SRS resource configured by the first cell for the terminal device by using SRS configuration information. Optionally, the SRS configuration information further includes an association relationship between at least one piece of downlink beam information and the at least one SRS resource, the first SRS resource is an SRS resource that is in the at least one SRS resource and that has an association relationship with first downlink beam information, and the first downlink beam information belongs to the at least one piece of downlink beam information.

In a possible design, the downlink beam information includes one or more of the following: an RS index, a TCI-state ID, and BWP information corresponding to a downlink beam.

In a possible design, the transceiver unit 720 is further configured to receive a measurement result from the first cell, where the measurement result includes a result of measuring one or more reference signals of the second cell by the terminal device; and determine, based on the measurement result, the at least one piece of downlink beam information associated with the at least one SRS resource.

In a possible design, the transceiver unit 720 is further configured to receive the second TA from the terminal device.

In a possible design, the transceiver unit 720 is further configured to receive first information from the first cell, where the first information includes the TA used by the terminal device in the first cell, and the time difference of arrival at the terminal device between the downlink reference signal of the first cell and the downlink reference signal of the second cell; and the processing unit 710 is further configured to determine the second TA based on the first information and the adjustment amount.

As shown in FIG. 8, this application further provides a communication apparatus 800. The communication apparatus 800 includes a processor 810, and may further include a communication interface 820. The processor 810 and the communication interface 820 are coupled to each other. It may be understood that the communication interface 820 may be a transceiver, an input/output interface, an input interface, an output interface, an interface circuit, or the like. Optionally, the communication apparatus 800 may further include a memory 830, configured to: store instructions executed by the processor 810, or store input data needed by the processor 810 to run the instructions, or store data generated after the processor 810 runs the instructions. The memory 830 may be a physically independent unit, or may be coupled to the processor 810, or the processor 810 includes the memory 830.

When the communication apparatus 800 is configured to implement the functions in the foregoing method embodiments, the processor 810 may be configured to implement the functions of the processing unit 710, and the communication interface 820 may be configured to implement the functions of the transceiver unit 720.

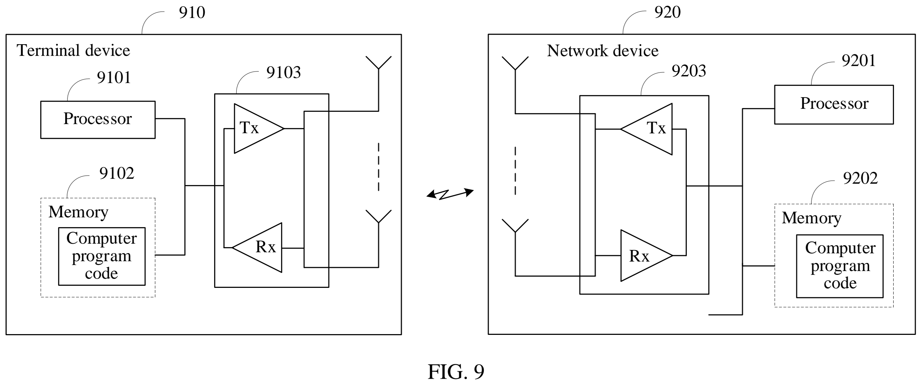

Based on a same technical concept as the timing advance adjustment method, an embodiment of this application further provides a communication system. Optionally, FIG. 9 is a diagram of structures of a terminal device 910 and a network device 920 according to an embodiment of this application.

The terminal device 910 includes at least one processor (where an example in which one processor 9101 is included is used for description in FIG. 9) and at least one transceiver (where an example in which one transceiver 9103 is included is used for description in FIG. 9). Optionally, the terminal device 910 may further include at least one memory (where an example in which one memory 9102 is included is used for description in FIG. 9).

The processor 9101, the memory 9102, and the transceiver 9103 are connected to each other through a communication line. The communication line may include a path for transmission of information between the foregoing components.

The processor 9101 may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor 9101 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be in a storage medium, and the storage medium is located in the memory 9102.

The memory 9102 may be a volatile memory or a non-volatile memory, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type. The memory may exist independently and is connected to the processor through a communication line. The memory may alternatively be integrated with the processor.

The memory 9102 is configured to store computer-executable instructions for executing the solutions of this application, and the processor 9101 controls execution of the computer-executable instructions. The processor 9101 is configured to execute the computer-executable instructions stored in the memory 9102, to implement a timing advance adjustment method provided in the following embodiments of this application.

Optionally, the computer-executable instructions in embodiments of this application may also be referred to as application program code or computer program code. This is not specifically limited in embodiments of this application.

The transceiver 9103 may use any transceiver-type apparatus. The transceiver 9103 may also be referred to as a transceiver unit, a transceiver machine, a transceiver apparatus, an interface unit, or the like, and may be configured to communicate with another device or communication network, for example, an ethernet, a radio access network (radio access network, RAN), or a wireless local area network (wireless local area network, WLAN). The transceiver 9103 may include a transmitter (transmitter, Tx) and/or a receiver (receiver, Rx), and an antenna.

The memory 9102 may exist independently and is connected to the processor 9101 through the communication line. Alternatively, the memory 9102 may be integrated with the processor 9101.

The memory 9102 is configured to store computer-executable instructions for executing the solutions of this application, and the processor 9101 controls execution of the computer-executable instructions. Specifically, the processor 9101 is configured to execute the computer-executable instructions stored in the memory 9102, to implement the timing advance adjustment method in embodiments of this application.

Alternatively, optionally, in this embodiment of this application, the processor 9101 may perform a processing-related function in a timing advance adjustment method provided in the following embodiments of this application, and the transceiver 9103 is responsible for communication with another device or a communication network. This is not specifically limited in this embodiment of this application.

When the terminal device is the chip, the chip includes a transceiver, a memory, and a processor. The transceiver may be an input/output circuit or a communication interface. The processor is a processor, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

The network device 920 includes at least one processor (where an example in which one processor 9201 is included is used for description in FIG. 9) and at least one transceiver (where an example in which one transceiver 9203 is included is used for description in FIG. 9). Optionally, the network device 920 may further include at least one memory (where an example in which one memory 9202 is included is used for description in FIG. 9). The processor 9201, the memory 9202, and the transceiver 9203 are connected to each other through a communication line. For related descriptions of the processor 9201, the memory 9202, and the transceiver 9203, refer to the descriptions of the processor 9101, the memory 9102, and the transceiver 9103 in the terminal device 910. Details are not described herein again.

When the network device is the chip, the chip includes a transceiver, a memory, and a processor. The transceiver may be an input/output circuit or a communication interface. The processor is a processor, a microprocessor, or an integrated circuit integrated on the chip. A sending operation performed by the network device (for example, the first cell or the second cell) in the foregoing method embodiments may be understood as an output of the chip, and a receiving operation performed by the network device (for example, the first cell or the second cell) in the foregoing method embodiments may be understood as an input of the chip.

It may be understood that the structures shown in FIG. 9 do not constitute specific limitations on the terminal device 910 and the network device 920. For example, in some other embodiments of this application, the terminal device 910 or the network device 920 may include more or fewer components than those shown in the figure, or combine some components, or split some components, or have different component arrangements. The components shown in the figure may be implemented by hardware, software, or a combination of software and hardware.

An embodiment of this application further provides a computer-readable medium. The computer-readable medium stores a computer program or instructions. When the computer program or the instructions are executed by a processor, the timing advance adjustment method in any one of the foregoing method embodiments is implemented.

An embodiment of this application further provides a computer program product, including a computer program or instructions. When the computer program or the instructions are executed by a processor, the timing advance adjustment method in any one of the foregoing method embodiments is implemented.

An embodiment of this application further provides a chip system, including a processor. The processor is configured to be coupled to a memory, and the memory is configured to store a computer program or instructions. When the computer program or the instructions are executed by the processor, the timing advance adjustment method in any one of the foregoing method embodiments is implemented.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application are described, a person skilled in the art who knows the basic inventive concept can make additional changes and modifications to these embodiments. Therefore, the following claims are intended to be construed as to cover the preferred embodiments and all changes and modifications falling within the scope of this application.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A timing advance adjustment method, comprising:
receiving a handover command from a first cell, wherein the handover command instructs to perform handover to a second cell;
sending a sounding reference signal SRS to the second cell based on a first timing advance TA;
receiving a TA adjustment command from the second cell, wherein the TA adjustment command comprises an adjustment amount for the first TA, and the adjustment amount is determined by the second cell based on the received SRS; and
sending an uplink signal to the second cell based on a second TA, wherein the second TA is determined based on the first TA and the adjustment amount.

2. The method according to claim 1, wherein before receiving the handover command from the first cell, the method further comprises:
receiving SRS configuration information from the first cell, wherein the SRS configuration information is used for configuring at least one SRS resource of the second cell; and
the sending the SRS to the second cell based on the first TA comprises:
sending the SRS to the second cell on a first SRS resource based on the first TA, wherein the first SRS resource belongs to the at least one SRS resource.

3. The method according to claim 2, wherein the SRS configuration information further comprises an association relationship between at least one piece of downlink beam information and the at least one SRS resource, the handover command further comprises first downlink beam information, and the first downlink beam information belongs to the at least one piece of downlink beam information; and
the first SRS resource is an SRS resource that is in the at least one SRS resource and that has an association relationship with the first downlink beam information.

4. The method according to claim 3, wherein before receiving the SRS configuration information from the first cell, the method further comprises:
sending a measurement result of the second cell to the first cell, wherein the measurement result comprises a measurement result of one or more reference signals of the second cell, and is used for determining the at least one piece of downlink beam information associated with the at least one SRS resource.

5. The method according to claim 1, wherein the handover command further comprises SRS resource indication information, and the sending the SRS to the second cell based on the first TA comprises:
sending, based on the first TA, the SRS to the second cell on an SRS resource indicated by the SRS resource indication information.

6. The method according to any one of claims 1 to 5, wherein the first TA is determined based on a TA used in the first cell, and a time difference of arrival between a downlink reference signal of the first cell and a downlink reference signal of the second cell.

7. The method according to any one of claims 1 to 6, wherein the method further comprises:
sending the second TA to the second cell.

8. A timing advance adjustment method, comprising:
sending, by a first cell, a handover command to a terminal device, wherein the handover command instructs to hand over the terminal device to a second cell;
receiving, by the second cell, a sounding reference signal SRS from the terminal device, wherein the SRS is sent by the terminal device based on a first timing advance TA;
sending, by the second cell, a TA adjustment command to the terminal device, wherein the TA adjustment command comprises an adjustment amount for the first TA, and the adjustment amount is determined by the second cell based on the received SRS; and
receiving, by the second cell, an uplink signal from the terminal device, wherein the uplink signal is sent by the terminal device based on a second TA, and the second TA is determined by the terminal device based on the first TA and the adjustment amount.

9. The method according to claim 8, wherein before sending, by the first cell, the handover command to the terminal device, the method further comprises:
sending, by the first cell, SRS configuration information to the terminal device, wherein the SRS configuration information is used for configuring at least one SRS resource of the second cell; and
receiving, by the second cell, the SRS from the terminal device comprises:
receiving, by the second cell, the SRS from the terminal device on a first SRS resource, wherein the first SRS resource belongs to the at least one SRS resource.

10. The method according to claim 9, wherein the SRS configuration information further comprises an association relationship between at least one piece of downlink beam information and the at least one SRS resource, the handover command further comprises first downlink beam information, and the first downlink beam information belongs to the at least one piece of downlink beam information; and
the first SRS resource is an SRS resource that is in the at least one SRS resource and that has an association relationship with the first downlink beam information.

11. The method according to claim 10, wherein before sending, by the first cell, the SRS configuration information to the terminal device, the method further comprises:
receiving, by the first cell, a measurement result from the terminal device, wherein the measurement result comprises a result of measuring one or more reference signals of the second cell by the terminal device; and
determining, by the first cell based on the measurement result, the at least one piece of downlink beam information associated with the at least one SRS resource.

12. The method according to claim 10, wherein before sending, by the first cell, the SRS configuration information to the terminal device, the method further comprises:
sending, by the first cell, a measurement result from the terminal device to a second cell, wherein the measurement result comprises a result of measuring one or more reference signals of the second cell by the terminal device; and
determining, by the second cell based on the measurement result, the at least one piece of downlink beam information associated with the at least one SRS resource.

13. The method according to claim 8, wherein the handover command further comprises SRS resource indication information, and receiving, by the second cell, the SRS from the terminal device comprises:
receiving, by the second cell, the SRS from the terminal device on an SRS resource indicated by the SRS resource indication information.

14. The method according to any one of claims 8 to 13, wherein the first TA is determined based on a TA used by the terminal device in the first cell, and a time difference of arrival at the terminal device between a downlink reference signal of the first cell and a downlink reference signal of the second cell.

15. The method according to any one of claims 8 to 14, wherein the method further comprises:
receiving, by the second cell, the second TA from the terminal device.

16. The method according to any one of claims 8 to 14, wherein the method further comprises:
receiving, by the second cell, first information from the first cell, wherein the first information comprises the TA used by the terminal device in the first cell, and the time difference of arrival at the terminal device between the downlink reference signal of the first cell and the downlink reference signal of the second cell; and
determining, by the second cell, the second TA based on the first information and the adjustment amount.

17. The method according to any one of claims 1 to 16, wherein the handover command is further used for triggering sending of the SRS to the second cell.

18. A communication apparatus, comprising a unit configured to perform the method according to any one of claims 1 to 17.

19. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 17 through a logic circuit or by executing instructions.

20. A chip system, wherein the chip system comprises a processor, the processor is configured to be coupled to a memory, the memory is configured to store a computer program or instructions, and when the computer program or the instructions are executed by the processor, the method according to any one of claims 1 to 17 is implemented.

21. A computer-readable storage medium, wherein the computer-readable storage medium stores a computer program or instructions; and when the computer program or the instructions are executed by a processor, the method according to any one of claims 1 to 17 is implemented.
